# EUROPÄISCHE PATENTANMELDUNG

(11) **EP 1 666 193 A2**
(43) Veröffentlichungstag der Anmeldung: **07.06.2006**
(21) Anmeldenummer: 05024299.9
(22) Anmeldetag: 08.11.2005
(51) Int. Cl.: B23P 19/00, B23P 19/04, B23Q 7/14, B65D 19/00

(54) **Verfahren, Vorrichtung und Palette zum Zuführen von Montageteilen zu Montagestationen**

(30) Priorität: 03.12.2004 DE 102004058387
(71) Anmelder: Alfing Montagetechnik GmbH, 73433 Aalen (DE)
(72) Erfinder: Nigmann, Horst, 73460 Hüttlingen (DE); Stifter, Franz, 73463 Westhausen (DE)
(74) Vertreter: HOFFMANN EITLE

(57) **Zusammenfassung**

Ein Verfahren zum Beschicken einer Montagestation mit Montageteilen (100, 112) besteht aus den folgenden Schritten: Vorsehen von Paletten (50, 52), auf denen die Montageteile (100, 112) lagerichtig und typenrein positioniert sind; Stapeln mehrerer Paletten (50, 52) zu zumindest einem Palettenturm (21-23); Aufnehmen der obersten Palette (50, 52) eines solchen Palettenturms (21-23); Befördern der aufgenommenen Palette (50, 52) bis in eine Übergabeposition; und Transferieren der in den Paletten (50, 52) positionierten Montageteile (100, 112) in dieser Übergabeposition auf ein Zuführband (41-50), das die Montageteile (100, 112) zu der zu beschickenden Montagestation führt.

## Beschreibung

### Technisches Gebiet

Die vorliegende Erfindung betrifft ein Verfahren, eine Vorrichtung und eine Palette zum Zuführen von Montageteilen zu Montagestationen.

In der Montagetechnik stellt sich häufig die Aufgabe, Montageteile in in einem Werkstück ausgebildete Ausnehmungen einzupressen. So werden beispielsweise bei der Montage von Zylinderköpfen für Verbrennungskraftmaschinen Ventilsitzringe und Ventilführungen in dafür vorgesehene Aufnahmen des Zylinderkopfes eingepresst.

Der Zylinderkopf zählt zu den kompliziertesten Gussteilen am Kraftfahrzeug. Reihenmotoren und 15°-V-Motoren haben nur einen Zylinderkopf, alle anderen Bauformen mindestens zwei. In aller Regel werden Zylinderköpfe aus einer Aluminiumlegierung hergestellt. Sie unterliegen bei ihrer Fertigung einem hohen mechanischen Bearbeitungs- und Montageaufwand. Dessen größter Teil entfällt auf die Gaswechselventile mit allen zugehörigen Bauteilen.

Diese Gaswechselventile sind Ein- und Auslassventile, die den Verbrennungsraum abdichten und den Gaswechsel im Motor steuern. Bei einem Zylinderkopf mit Vierzylindertechnik sind für jeden Zylinder vier Gaswechselventile im Zylinderkopf vorgesehen, und zwar zwei Einlass- und zwei Auslassventile. Diese Ventile umfassen jeweils einen Ventilteller und einen Ventilstößel, der verschiebbar in einer Bohrung im Zylinderkopf sitzt, wobei der Ventilteller mit einem Ventilsitz am Eingang der Bohrung in Eingriff gelangen kann, um die Einlass- und Auslassöffnungen zur Zylinderkammer zu öffnen und zu schließen.

Für jedes Ventil ist eine Ventilführung vorgesehen, die dazu dient, den Ventilstößel in seiner Bewegung zu führen. Sie hat die Aufgabe, die Seitenkräfte aufzunehmen, welche auf den Ventilstößel wirken. Die Ventilführung zentriert das Ventil auf den Ventilsitz und leitet einen Teil der Wärme vom Ventilkopf über den Ventilstößel zum Zylinderkopf ab.

Ventilsitzringe werden in den Zylinderkopf eingesetzt, um verschleißfeste Auflageflächen für die Ventilteller bereitzustellen.

Die Ventilsitzringe und Ventilführungen werden nach vorheriger Bearbeitung und eventuell Erwärmung der entsprechenden Einbaustellen im Zylinderkopf unterkühlt eingepresst. Sie werden dann im Zylinderkopf durch einen Presssitz in ihrer Position gehalten. Die Ventilführungen und Ventilsitzringe werden beim Einpressen in die Gehäusebohrung des Zylinderkopfs radial eingeschnürt. Die Gehäusebohrung hingegen wird aufgeweitet.

Die korrekte Montage von Montageteilen wie Ventilsitzringen und Ventilführungen ist entscheidend für die einwandfreie Arbeitsweise eines Zylinderkopfs. Dafür ist wiederum entscheidend, dass die Montageteile der Montagestation lagerichtig, typenrein und maßgeprüft zugeführt werden.

### Stand der Technik

Bisher werden solche Montageteile meist in Form von Schüttgut in der Nähe der zu beschickenden Montagestationen positioniert. Zum Zuführen der Montageteile zu den Montagestationen sind Zuführgeräte vorhanden. Diese weisen Sortier- und Prüfeinrichtungen auf, die dafür sorgen, dass die Montageteile der Montagestation typenrein und lagerichtig zugeleitet werden. Die von diesen Zuführgeräten aussortierten, nicht verwendbaren Teile werden entsorgt.

Solche Vorrichtungen zum Ausrichten und/oder Sortieren von Einzelteilen sind beispielsweise aus DE 40 25 391 C2 und DE 197 09 714 A1 bekannt.

Das Sortieren und Prüfen der anfangs als Schüttgut vorliegenden Montageteile findet beispielsweise unter Verwendung von Kameras oder Endschaltern statt. Dabei ist für jede Art von zuzuführendem Montageteil eine separate Prüf- und Sortiereinrichtung notwendig.

### Darstellung der Erfindung

Der vorliegenden Erfindung liegt die Aufgabe zugrunde, ein Verfahren und eine Vorrichtung zum Zuführen von Montageteilen zu Montagestationen zu schaffen, mit denen die Montagestationen auf platzsparendere und weniger störanfällige Art und Weise mit typenreinen und lagerichtigen Montageteilen beschickt werden können.

Diese Aufgabe löst ein Verfahren gemäß dem Patentanspruch 1, eine Vorrichtung gemäß dem Patentanspruch 9 sowie eine Palette gemäß dem Patentanspruch 12.

Das erfindungsgemäße Verfahren besteht aus den folgenden Schritten:
- Vorsehen von Paletten, auf denen die Montageteile lagerichtig und typenrein positioniert sind,
- Stapeln mehrerer Paletten zu zumindest einem Palettenturm,
- Aufnehmen der obersten Palette eines solchen Palettenturms,
- Befördern der aufgenommenen Palette bis in eine Übergabeposition, und
- Transferieren der in den Paletten positionierten Montageteile in dieser Übergabeposition auf eine Zuführeinrichtung, die die Montageteile zu der zu beschickenden Montagestation führt.

Das erfindungsgemäße Verfahren eignet sich besonders gut für die Zuführung von sogenannten Massenteilen zu Montagestationen, beispielsweise zur Zuführung von Ventilsitzringen, Ventilführungen, Verschlussdeckel, Verschlussschrauben, Stiftschrauben und dergleichen zu einer Montagestation für Zylinderköpfe.

Die Montageteile werden typenrein und lagerichtig in die Paletten eingespeichert. Dies geschieht möglichst direkt beim Hersteller der Montageteile. Dort verlassen die Montageteile den Fertigungsprozess nämlich in einer definierten Lage und typenrein; statt die Montageteile anschließend als Schüttgut zu transportieren, wird die Lagerichtigkeit und Typenreinheit der Montageteile dadurch beibehalten, dass die Montageteile sofort auf Paletten angeordnet werden.

Durch die vorkommissionierten Montageteile in den Palettentürmen entfällt das zeitaufwendige, kostenintensive und fehleranfällige Sortieren und Prüfen der Montageteile in den Montageanlagen.

Aufgrund der Anordnung der Montageteile in Palettentürmen ergibt sich mit dem erfindungsgemäßen Verfahren, verglichen mit den bisher vorhandenen Zuführgeräten, eine hohe Bevorratungskapazität an den Montagestationen bei verhältnismäßig geringem Platzbedarf.

Mit dem erfindungsgemäßen Verfahren besteht außerdem auch ein geringerer Steuerungsaufwand (SPS-Anteil) verglichen mit den herkömmlichen Zuführgeräten mit Sortiereinrichtungen, da weniger mechanische Bewegungen und Prüfvorgänge notwendig sind.

Das System kann schließlich auch einfach nachträglich erweitert werden.

Vorteilhafte Weiterbildungen finden sich in den abhängigen Ansprüchen.

Vorzugsweise schiebt ein Greifer die Montageteile in der Übergabeposition von der Palette auf ein entsprechendes Zuführband als vorzugsweise Ausgestaltung der Zuführeinrichtung. Dazu werden vorzugsweise Paletten verwendet, die durch Stege voneinander getrennte Spuren aufweisen, in denen die Montageteile aufgenommen sind. Der Greifer schiebt die Montageteile dann in der Übergabeposition aus den Spuren der Palette heraus auf das Zuführband.

Dabei kann der Greifer die Palette nach dem Räumen einer Spur der Palette bezüglich des Zuführbands versetzen, bevor die nächste Spur geräumt wird. Die Montageteile aus den einzelnen Spuren der Palette können so hintereinander bzw. in einer Reihe auf dem Zuführband platziert werden.

Die geleerte Palette führt der Greifer vorzugsweise zurück und legt sie im Bereich der Palettentürme ab; hier kann nach und nach ein Turm aus leeren Paletten entstehen, der dann abtransportiert wird.

Wie viele Paletten aufeinandergestapelt werden können, hängt von den Abmaßen sowie der Stabilität der Paletten ab.

Beispielsweise können bis zu 50 Paletten zu einem Palettenturm gestapelt werden.

Die erfindungsgemäße Vorrichtung zum Beschicken einer Montagestation mit Montageteilen hat ein Portalsystem mit:
- einer Greifeinrichtung zum Aufnehmen einer obersten Palette eines Palettenturms aus mehreren gestapelten Paletten, auf denen die Montageteile lagerichtig und typenrein positioniert sind, und
- einer Führung zum Führen dieser Greifeinrichtung in eine Übergabeposition, in der die Montageteile mittels einer Übergabeeinrichtung der Greifeinrichtung von der aufgenommenen Palette auf eine zu der Montagestation gerichtete Zuführeinrichtung transferiert werden.

Als "Greifeinrichtung" im Sinne der vorliegenden Anmeldung werden alle Einrichtungen verstanden, die in irgendeiner Form eine oberste Palette von einem Palettenstapel oder -turm abheben können.

Die Ausgestaltung der Übergabeeinrichtung der Greifeinrichtung richtet sich nach der Art der verwendeten Paletten. Beispielsweise kann die Übergabeeinrichtung so ausgestaltet sein, dass sie die Montageteile in der Übergabeposition aus durch Stege voneinander getrennten Spuren der Palette herausschiebt, in denen die Montageteile aufgenommen sind.

Die Greifeinrichtung kann außerdem mit einer Verschlußeinrichtung versehen sein, die die Montageteile während des Transports der Palette vom Palettenturm in die Übergabeposition auf der Palette sichert. Insbesondere bei Paletten mit an ihren Enden offenen Spuren wird so verhindert, dass die Montageteile beim Transport von der Palette herunterfallen.

Schließlich schafft die Erfindung auch eine Palette zum Aufnehmen von lagerichtigen und typenreinen Montageteilen, mit durch Stege voneinander getrennten Spuren zur Aufnahme der Montageteile.

Die Spuren können einen U-förmigen Querschnitt haben und an ihren Enden geöffnet sein, so dass die Montageteile seitlich in die Spuren hinein und aus den Spuren heraus schiebbar sind.

Die Paletten sind vorzugsweise stapelbar und so ausgestaltet, dass im gestapelten Zustand der Paletten die Stege der einzelnen Paletten übereinander zu liegen kommen.

Insbesondere wird bevorzugt, dass im gestapelten Zustand der Paletten die Enden der Spuren einer unteren Palette mittels der darüber angeordneten Palette verschlossen sind.

### Kurze Beschreibung der Zeichnungen

Die Erfindung wird im folgenden anhand von Ausführungsbeispielen mit Bezug auf die anliegenden Zeichnungen näher beschrieben. Darin zeigt
- Figur 1: eine erfindungsgemäße Vorrichtung zum Zuführen von Montageteilen zu Montagestationen in der Seitenansicht,
- Figur 2: eine schematische Draufsicht auf Palettentürme und Zuführbänder,
- Figur 3: eine erste Ausführungsform einer erfindungsgemäßen Palette in der Draufsicht, Frontansicht und Seitenansicht,
- Figur 4: zwei der in Figur 3 gezeigten Paletten, aufeinander gestapelt,
- Figur 5: eine zweite Ausführungsform einer erfindungsgemäßen Palette in der Draufsicht und Seitenansicht, und
- Figur 6: eine Detailansicht des Greifers der in der Figur 1 dargestellten Vorrichtung.

### Ausführliche Beschreibung einer bevorzugten Ausführungsform der Erfindung

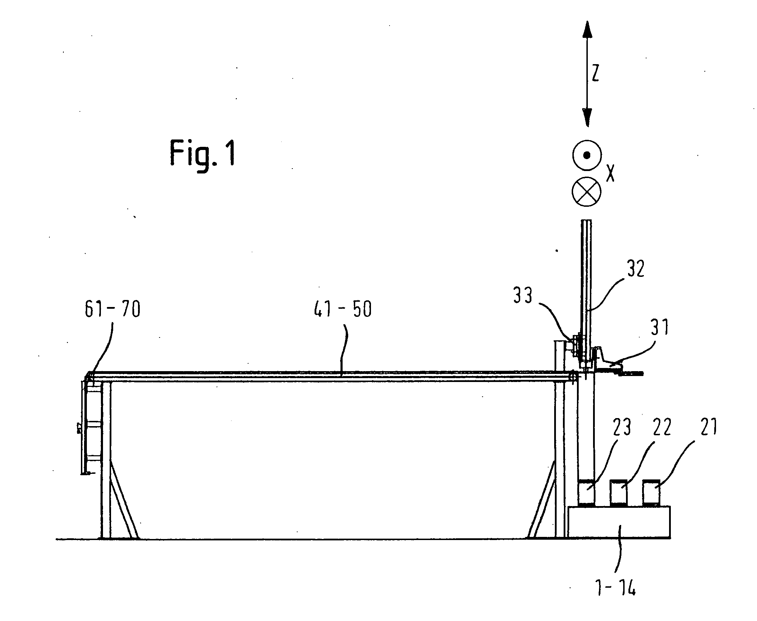

Eine erfindungsgemäße Vorrichtung zum Zuführen von Montageteilen zu Montagestationen ist in Figur 1 dargestellt.

Die erfindungsgemäße Vorrichtung ist so ausgestaltet, dass sie die zuzuführenden Montageteile aus Paletten entnimmt und zu zumindest einer Montagestation (nicht dargestellt) befördert.

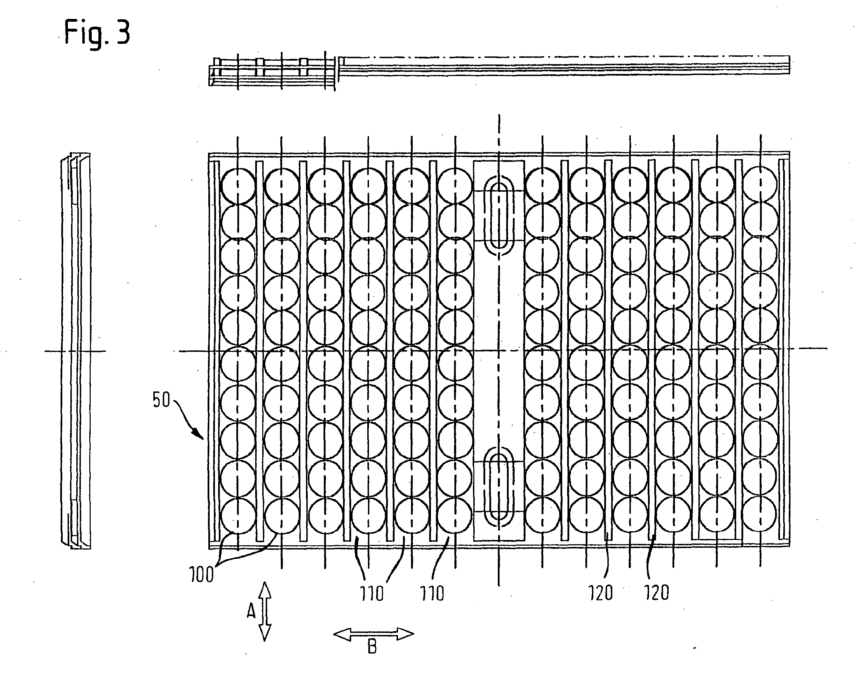

Die Ausgestaltung dieser Paletten wird später noch genauer mit Bezug auf die Figuren 3 bis 5 beschrieben.

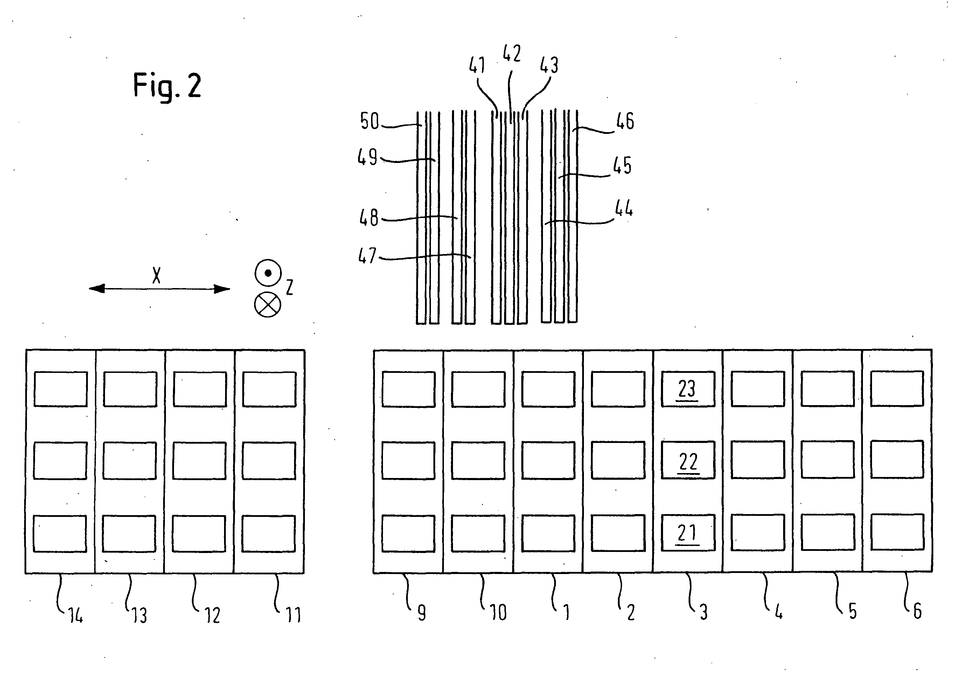

Zum Verständnis der Funktionsweise der erfindungsgemäßen Vorrichtung ist zunächst wesentlich, dass die besagten Paletten mit den Montageteilen aufeinander gestapelt sind und Palettentürme bilden. Diese Palettentürme sind in den Figuren 1 und 2 mit den Bezugsziffern 221-23 bezeichnet. In den Paletten sind die zuzuführenden Montageteile bereits typenrein und lagerichtig angeordnet. Das Sortieren und Prüfen der Montageteile mittels der oben erwähnten Zuführgeräte entfällt somit komplett.

Insbesondere aus Figur 2 wird deutlich, dass die Palettentürme in Blöcken nebeneinander angeordnet sind. Im dargestellten Beispiel sind vierzehn Blöcke 1-14 à drei Paletten 221-23 vorhanden. In jedem der Blöcke 1-14 befinden sich Montageteile eines bestimmten Typs; von jedem Typ sind somit drei Palettentürme vorhanden.

Beispielsweise können die in Figur 2 dargestellten Palettentürme wie folgt bestückt sein: Paletten 1-6 mit Ventilsitzringen, Paletten 11-14 mit Ventilführungen; Paletten 9 und 10 können in diesem Beispiel Leerpaletten sein.

Als wesentlichen Bestandteil weist die erfindungsgemäße Vorrichtung ein Portalsystem auf, an dem ein Greifer 31 geführt ist (Figur 1). Dieser ist bezüglich der Palettentürme 21-23 in X- und in Z-Richtung verfahrbar (diese Richtungen sind in den Figuren 1 und 2 angegeben). Dazu dienen eine Z-Führung 32 sowie eine X-Führung 33.

Durch Verfahren des Greifers 31 in Z-Richtung kann die oberste Palette von einem der Palettentürme 21-23 abgehoben werden. Der Greifer 31 bewegt sich dann entlang der X-Führung bis in eine Übergabeposition, wo er die Montageteile von der Palette an eines von mehreren dargestellten Führungsbändern 41-50 übergibt. Diese Führungsbänder befördern die Montageteile zu Vertikalmagazinen 61-70 einer (nicht dargestellten) Montagestation, von wo aus sie an die Montagestation übergeben und dort beispielsweise an einem Zylinderkopf montiert werden.

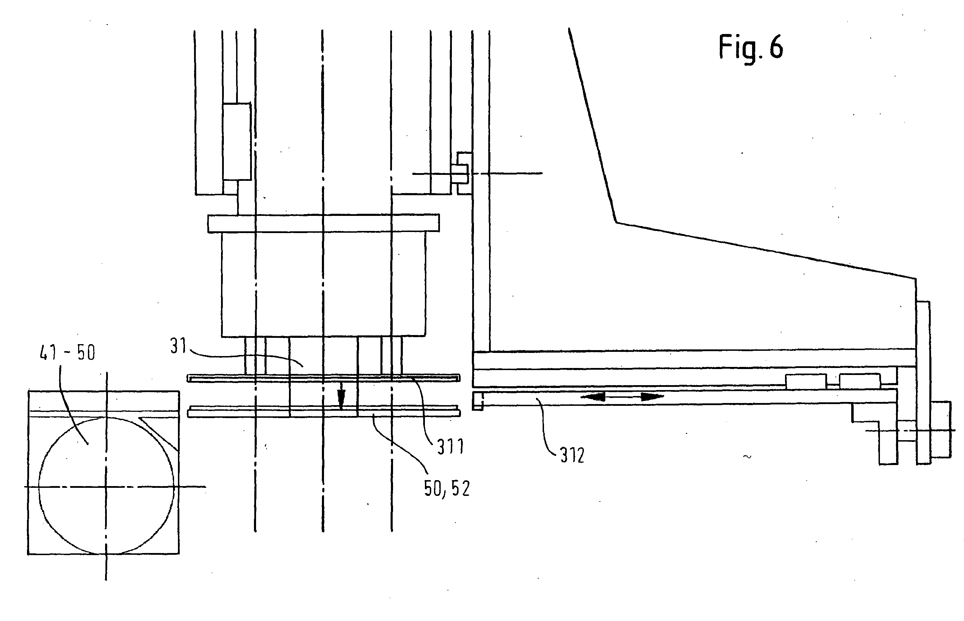

Zur Übergabe der Montageteile von der Palette an die Führungsbänder in der Übergabeposition ist der Greifer 31 mit einer Übergabeeinrichtung ausgestattet. Die Ausgestaltung dieser Übergabeeinrichtung ist an die Ausgestaltung der Paletten angepasst, die in der erfindungsgemäßen Vorrichtung verwendet werden, und wird später noch genauer mit Bezug auf Figur 6 beschrieben.

Eine erste Ausführungsform einer in der Vorrichtung gemäß den Figuren 1 und 2 verwendbaren Palette zeigt die Figur 3. Diese Palette, in Figur 3 mit der Bezugsziffer 50 bezeichnet, kann beispielsweise als Tiefziehfolie ausgestaltet sein. Die Abmaße der Palette sind abhängig von der Größe, der Form und dem Gewicht der darin zu befördernden Montageteile. Mögliche Palettengrößen sind beispielsweise 300 x 400 mm, 400 x 600 mm, 600 x 800 mm und 800 x 1200 mm.

Die in Figur 3 dargestellte Palette 50 ist zur Aufnahme von Ventilsitzringen ausgestaltet. Im dargestellten Beispiel sind auf der Palette 120 Ventilsitzringe 100 angeordnet, nämlich 12 Reihen à 10 Stück.

Die Ventilsitzringe 100 befinden sich in auf der Palette 50 ausgebildeten Spuren 110. Diese Spuren 110 sind durch längs verlaufende Stege 120 voneinander getrennt und an ihren Enden geöffnet. Die Ventilsitzringe 100 können so seitlich, d.h. in Richtung des Pfeils A in Figur 3, in die Spuren 110 auf der Palette 50 hineingeschoben und auch wieder aus den Spuren 110 herausgeschoben werden. Die Stege 120 sind so voneinander beabstandet, dass sie diese Verschiebung der Ventilsitzringe 100 in den Spuren 110 ermöglichen, die Ventilsitzringe 100 aber in der rechtwinklig zu dieser Verschiebung verlaufenden Richtung (d.h. in Richtung des Pfeils B in Figur 3) festlegen.

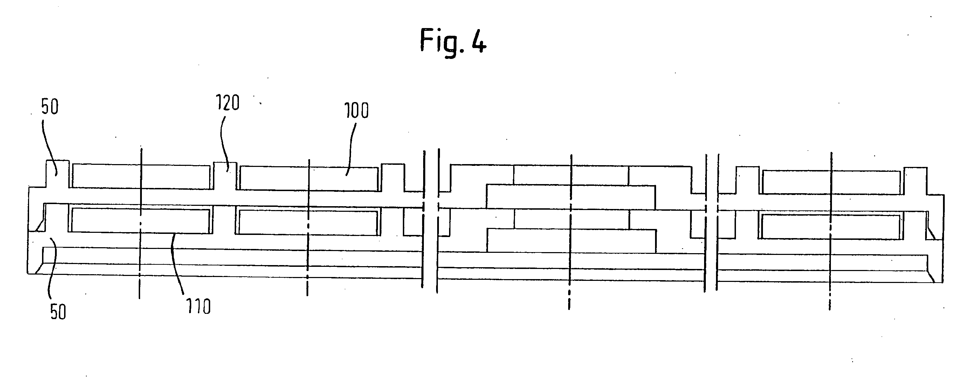

Figur 4 zeigt zwei der in Figur 3 dargestellten Paletten 50, die aufeinander gestapelt sind. Hier wird deutlich, dass beim Aufeinanderstapeln zweier solcher Paletten 50 die Stege 120 der einzelnen Paletten 50 übereinander zu liegen kommen. Jeweils zwei benachbarte Stege 120, eine Spur 110 der unteren Palette und der Boden der oberen Palette bilden so eine Art "Kanal", in dem sich die Montageteile, in diesem Fall die Ventilsitzringe 100, befinden. Die Montageteile sind dann nur noch in Längsrichtung dieses Kanals verschieblich.

In Figur 4 sind die Enden dieser Kanäle offen dargestellt; die Paletten 50 sind aber vorzugsweise so ausgestaltet, dass die jeweils obere Palette die Enden der Spuren der jeweils unteren Palette und somit die Enden der gebildeten Kanäle verschließt. Die Montageteile können dann verliersicher zwischen den beiden Paletten aufbewahrt und gleichzeitig vor Schmutz und Beschädigungen geschützt werden.

Auf diese Art und Weise können die Paletten 50 zu Türmen bis zu einer Höhe von ca. 1 m aufgestapelt werden. Die Paletten 50 zentrieren sich gegenseitig und schützen die Montageteile 100 vor Beschädigung und Verschmutzung.

Die erfindungsgemäßen Paletten 50 haben eine große Speicherkapazität: Beispielsweise reicht die Kapazität eines 800 mm hohen Palettenturms bei einer Palettengröße von 400 x 600 mm, zum Vorhalten von Ventilsitzringen mit einem Durchmesser von 36 mm zur Montage an einem 6-Zylinderkopf mit 4-Ventiltechnik, bei einer Taktzeit von 25 Sekunden für ca. 3,5 Stunden. Mit zwei Türmen kann daher bereits eine komplette Schicht versorgt werden.

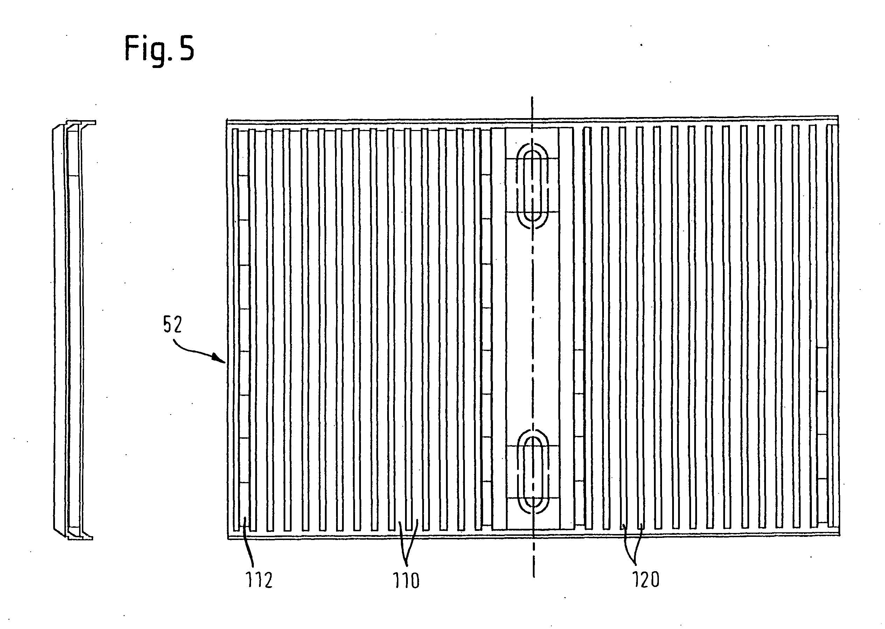

Figur 5 zeigt eine alternative Ausführungsform einer erfindungsgemäßen Palette. Diese Palette 52 ist zur Aufnahme von Ventilführungen 112 ausgestaltet; es können 270 Ventilführungen 112 auf einer Palette 52 untergebracht werden, nämlich 30 Reihen ä 9 Stück.

Auch diese Palette 52 weist, ebenso wie die in Figur 3 dargestellte, an ihren Enden offene Spuren 110 und Stege 120 auf; deren Abmaße sind an die Dimensionen der Ventilführungen 112 angepasst.

In beiden Ausführungsformen haben die Spuren 110 einen U-förmigen Querschnitt.

Die oben bereits erwähnte Übergabeeinrichtung des Greifers 31 des Portalsystems ist nun so ausgestaltet, dass sie in der besagten Übergabeposition die Montageteile 100, 112 von der am Greifer 31 befindlichen Palette 50, 52 auf das entsprechende Übergabeband 41-50 transferiert. Dazu nutzt die Übergabeeinrichtung die Anordnung der Montageteile 100, 112 in den Spuren 110 der Paletten 50, 52 aus.

Die Übergabeeinrichtung hat in der hier beschriebenen Ausführungsform die Form eines Ausschiebers, der am Greifer 31 vorgesehen ist und die Montageteile 100, 112 an der Übergabeposition einfach aus den Spuren 110 der Palette 50, 52 auf das entsprechende Zuführband 41-50 schiebt.

Dieser Ausschieber ist in der Detailansicht des Greifers 31 in Figur 6 mit der Bezugsziffer 312 bezeichnet. Er ist relativ zur Palette 50, 52 beweglich und räumt die Spuren 110 der Palette 50, 52 nacheinander. In Figur 6 sind außerdem auch die Palette 50, 52 und die Übergabebänder 41-50 zu sehen.

Alternativ können aber auch mehrere Ausschieber oder sogar für jede Spur 110 der Palette 50, 52 ein eigener Ausschieber am Greifer 31 vorgesehen sein.

Beim Transport der Paletten 50, 52 vom Palettenturm bis zur Übergabeposition sollten die Spuren 110 der Paletten 50, 52 dagegen möglichst an ihren Enden verschlossen sein, um ein Herausfallen der Montageteile 100, 112 aus der Palette 50, 52 zu verhindern. Dazu ist der Greifer 31 mit einer plattenförmigen Lagesicherung 311 für die auf der Palette 50, 52 befindlichen Montageteile versehen, die verhindert, dass die Montageteile beim Transport von der Palette 50, 52 herunterfallen, und die erst in der Übergabeposition zum Ausschieben der Montageteile 100, 112 aus den Spuren 110 geöffnet wird.

Die gesamte Vorrichtung kann zur Beschickung einer einzelnen Montagestation dienen. In diesem Fall können die Palettentürme möglichst nah an der zu beschickenden Montagestation positioniert werden, um die von den Montageteilen zurückzulegenden Wege möglichst kurz zu halten. Die erfindungsgemäße Vorrichtung kann aber auch zentral zur Beschickung mehrerer Montagestationen vorgesehen sein.

## Patentansprüche

1. Verfahren zum Beschicken einer Montagestation mit Montageteilen (100, 112), mit den folgenden Schritten:
- Vorsehen von Paletten (50, 52), auf denen die Montageteile (100, 112) lagerichtig und typenrein positioniert sind,
- Stapeln mehrerer Paletten (50, 52) zu zumindest einem Palettenturm (21-23),
- Aufnehmen der obersten Palette (50, 52) eines solchen Palettenturms (21-23),
- Befördern der aufgenommenen Palette (50, 52) bis in eine Übergabeposition, und
- Transferieren der in den Paletten (50, 52) positionierten Montageteile (100, 112) in dieser Übergabeposition auf eine Zuführeinrichtung (41-50), die die Montageteile (100, 112) zu der zu beschickenden Montagestation führt.

2. Verfahren nach Anspruch 1, bei welchem die oberste Palette mittels eines Greifers (31) aufgenommen wird, der die Montageteile (100, 112) in der Übergabeposition von der Palette (50, 52) auf ein entsprechendes Zuführband (41-50) schiebt.

3. Verfahren nach Anspruch 1 oder 2, bei welchem die verwendeten Paletten (50, 52) durch Stege (120) voneinander getrennte Spuren (110) aufweisen, in denen die Montageteile (100, 112) aufgenommen sind, wobei der Greifer (31) die Montageteile (100, 112) in der Übergabeposition aus den Spuren (110) der Palette (50, 52) heraus auf das Zuführband (41-50) schiebt.

4. Verfahren nach Anspruch 3, bei welchem der Greifer (31) die Palette (50, 52) nach dem Räumen einer Spur (110) der Palette (50, 52) bezüglich des Zuführbands (41-50) versetzt, bevor die nächste Spur (110) geräumt wird.

5. Verfahren nach einem der vorangehenden Ansprüche, bei welchem der Greifer (31) die in der Übergabeposition geleerte Palette (50, 52) anschließend zurückführt und im Bereich der Palettentürme (21-23) ablegt.

6. Verfahren nach einem der vorangehenden Ansprüche, bei welchem bis zu 50 Paletten (50, 52) zu einem Palettenturm gestapelt werden.

7. Verfahren nach einem der vorangehenden Ansprüche, bei welchem die lagerichtige und typenreine Anordnung der Montageteile (100, 112) auf den Paletten (50, 52) **dadurch** erreicht wird, dass die Lage und Typenreinheit der Montageteile (100, 112) bereits vom Abschluss der Produktion der Montageteile (100, 112) an beibehalten wird.

8. Verfahren nach einem der vorangehenden Ansprüche, bei welchem für jede Art von Montageteil (100, 112) mehrere Palettentürme (21-23) gebildet werden.

9. Vorrichtung zum Beschicken einer Montagestation mit Montageteilen (100, 112), mit einem Portalsystem mit:
- einer Greifeinrichtung (31) zum Aufnehmen einer obersten Palette (50, 52) eines Palettenturms (21-23) aus mehreren gestapelten Paletten, auf denen die Montageteile (100, 112) lagerichtig und typenrein positioniert sind, und
- einer Führung (32, 33) zum Führen der Greifeinrichtung (31) in eine Übergabeposition, in der die Montageteile (100, 112) mittels einer Übergabeeinrichtung der Greifeinrichtung (31) von der aufgenommenen Palette (50, 52) auf eine zu der Montagestation gerichtete Zuführeinrichtung (41-50) transferiert werden.

10. Vorrichtung nach Anspruch 9, bei welcher die Übergabeeinrichtung der Greifeinrichtung (31) so ausgestaltet ist, dass sie die Montageteile (100, 112) in der Übergabeposition aus durch Stege (120) voneinander getrennten Spuren (110) der Palette (50, 52) herausschiebt, in denen die Montageteile (100, 112) aufgenommen sind.

11. Vorrichtung nach Anspruch 9 oder 10, bei welcher die Greifeinrichtung (31) außerdem mit einer Verschlußeinrichtung versehen ist, die die Montageteile (100, 112) während des Transports der Palette (50-52) vom Palettenturm (21-23) in die Übergabeposition auf der Palette (50-52) sichert.

12. Palette (50, 52) zum Aufnehmen von lagerichtigen und typenreinen Montageteilen (100, 112), mit durch Stege (120) voneinander getrennten Spuren (110) zur Aufnahme der Montageteile (100, 112).

13. Palette (50, 52) nach Anspruch 12, bei welcher die Spuren (110) einen U-förmigen Querschnitt haben.

14. Palette (50, 52) nach einem der Ansprüche 12 und 13, bei welcher die Spuren (110) an ihren Enden geöffnet sind, so dass die Montageteile (100, 112) seitlich (A) in die Spuren (110) hinein und aus den Spuren (110) heraus schiebbar sind.

15. Palette (50, 52) nach einem der Ansprüche 12 bis 14, die stapelbar und so ausgestaltet ist, so dass im gestapelten Zustand der Paletten die Stege (120) der einzelnen Paletten übereinander zu liegen kommen.

16. Palette (50, 52) nach Anspruch 15, die so ausgestaltet ist, dass im gestapelten Zustand der Paletten die Enden der Spuren (110) einer unteren Palette (50, 52) mittels der darüber angeordneten Palette (50, 52) verschlossen sind.

17. Verfahren nach einem der Ansprüche 1 bis 8, Vorrichtung nach einem der Ansprüche 9 bis 11 oder Palette (50, 52) nach einem der Ansprüche 12 bis 16 zur Zuführung von Massenteilen wie Ventilsitzringen, Ventilführungen, Verschlussdeckel, Verschlussschrauben, Stiftschrauben, und dergleichen zu einer Montagestation für Zylinderköpfe.
